# EUROPEAN PATENT APPLICATION

(11) **EP 1 811 093 A1**
(43) Date of publication of application: **25.07.2007**
(21) Application number: 07000330.6
(22) Date of filing: 09.01.2007
(51) Int. Cl.: E03F 5/04, E02D 29/14

(54) **Slope-adjustable drain apparatus**

(30) Priority: 18.01.2006 SE 0600090
(71) Applicant: Purus AB, 275 31 Sjöbo (SE)
(72) Inventor: Persson, Per, 242 91 Hörby (SE)
(74) Representative: Wagner, Karl Heinz

(57) **Abstract**

The present invention concerns an arrangement (1) for a drain arrangement (2) for the adaptation of the drain arrangement to the gradient of the upper surface of an underlayer in which the drain arrangement is installed. The arrangement (1) consists of a unit (11) that can be mounted at the top of the drain arrangement (2), the said unit (11) comprises a first part (12) with means (14) for the mounting of the unit (11) onto the drain arrangement (2) and with a first adjustment means (15) that interacts with a second adjustment means (16) on a second part (13) of the unit in order to place as required the second part obliquely or to cause it to lie at an angle relative to the first part essentially to the same degree as the upper surface of the underlayer in which the drain arrangement is installed, and the said mounting means (14) on the first part (12) is designed such that it is possible, as required, to place the second part (13) obliquely or to cause it to lie at an angle in essentially the same direction as the upper side of the said underlay.

## Description

The present invention concerns an arrangement for a drain arrangement for adaptation of the drain arrangement to the gradient of the upper surface of an underlayer in which the drain arrangement is installed.

When installing drain arrangements such as drainage gullies or extension rings for drainage gullies, in floor elements or in other underlayers, it is often the case that the drain arrangement does not obtain the gradient relative to the upper surface of the underlayer in question that is desirable for optimal connection of the cover of the underlayer to the drain arrangement and thus the optimal drainage that is associated with this.

The aim of the present invention is to eliminate this problem and to provide an arrangement for a drain arrangement with optimally adaptable gradient according to the gradient of the upper surface of the underlayer for the drain arrangement for optimal connection of the covering of the underlayer to the drain arrangement.

The arrangement according to the invention is characterised in that the arrangement consists of a unit that can be mounted at the top of the drain arrangement, that the said unit comprises a first part with means for mounting the unit onto the drain arrangement and with a first adjustment means that interacts with a second adjustment means on a second part of the unit in order to be able to position as required the second part obliquely or at an angle relative to the first part essentially to the same amount as the upper surface of the underlayer in which the drain arrangement is installed, and that the said mounting means on the first part is designed such that it is possible to position as required this second part obliquely or at an angle in principally the same direction as the upper surface of the said underlayer.

A drain arrangement is obtained through the invention without problems of leakage or drainage.

The above-mentioned characteristics and other characteristics of the invention will be described in more detail below with reference to the attached drawings, in which:
figure 1 is a perspective view of an embodiment of the arrangement according to the invention placed onto a drain arrangement in the form of an extension ring for a drainage gully, in this case a side-emptying floor gully, at a first end position;
figure 2 is a side view of the extension ring with the arrangement according to the invention at the first end position;
figure 3 is a section through the extension ring with the arrangement according to the invention in the first end position;

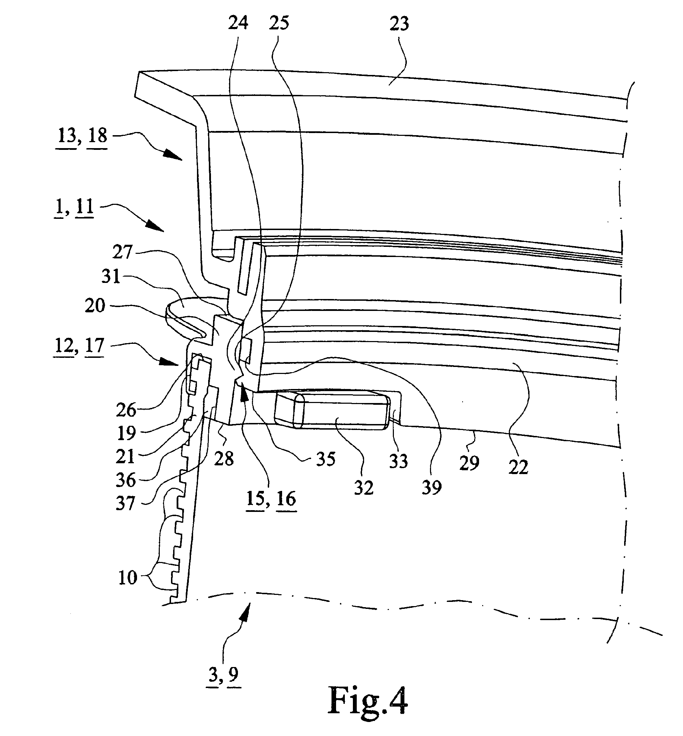

figure 4 is a cut view in perspective through a part of the extension ring with the arrangement according to the invention in the first end position;
figure 5 is a side view of the extension ring with the arrangement according to the invention in a second, oblique end position;
figure 6 is a section through the extension ring with the arrangement according to the invention in the second, oblique end position; and

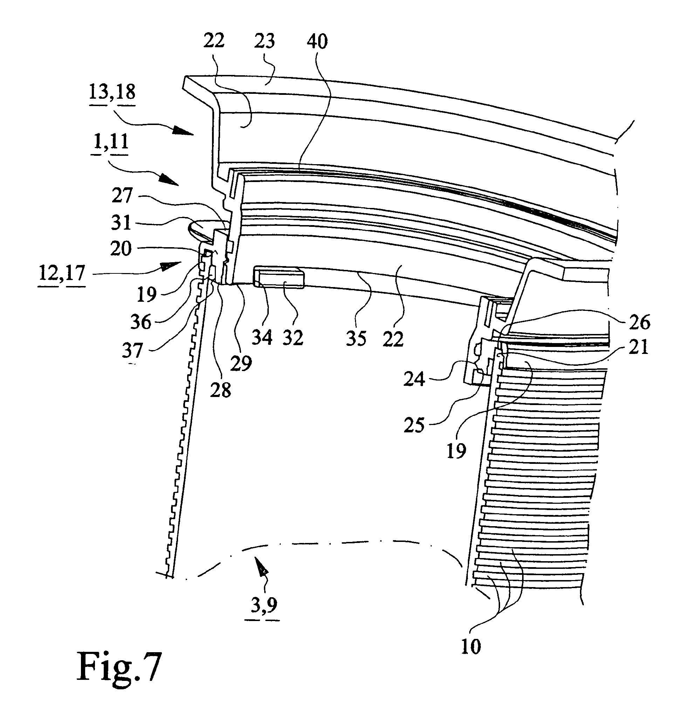

figure 7 is a cut view in perspective through a part of the extension ring with the arrangement according to the invention in the second, oblique position.

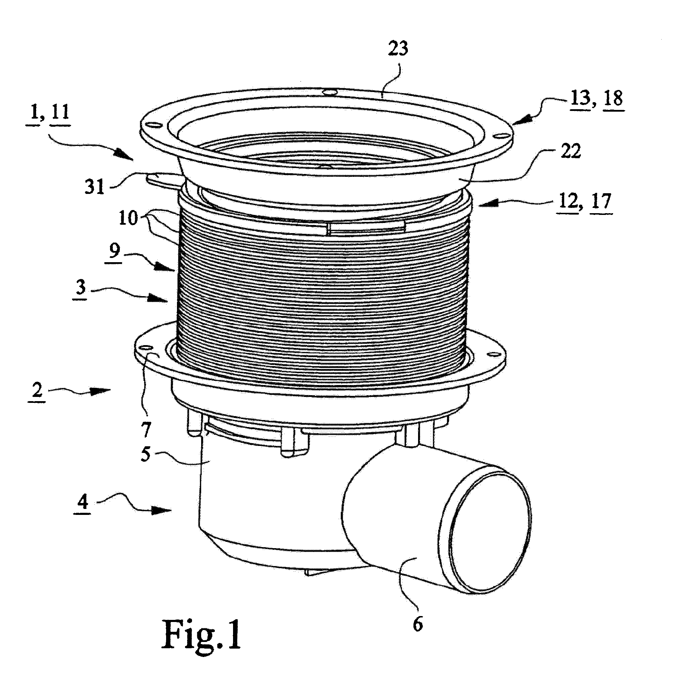

With reference initially to Figure 1, an arrangement 1 according to the invention is here mounted on a drain arrangement 2 in the form of an extension ring 3 that is, in turn, installed on a drainage gully 4, in this case a side-emptying floor gully. The floor gully is of conventional type with a bowl-shaped inlet 5, a laterally directed outlet 6 in the form of a tube that may be connected to a drainage pipe (not shown in the drawing), and a flange 7 located at the top of the inlet 5 and directed principally radially outwards. Alternatively, the arrangement 1 according to the invention can be mounted onto a drain arrangement 2 in the form solely of a drainage gully. i.e. mounted directly onto a drainage gully of a design suitable for the purpose. Drainage gullies that may be considered thus comprise both side-emptying and bottom-emptying drainage gullies, floor gullies and roof gullies, and gullies of plastic and gullies of metal.

The extension ring 3 demonstrates a tube-formed part 8, downwardly protruding into the inlet 5 of the floor gully and an upper tube-formed part 9 that protrudes from this tube-formed part 8 from the inlet 5 and that is provided on its outer surface with a groove 10. The extension ring 3 can be cut to the desired height as required. Thus the extension ring 3 can, according to one suitable design, be cut from approximately 100 mm to approximately 38 mm in steps of 4 mm.

During the completion of an underlayer with a drain arrangement 2 installed in it, the arrangement 1 according to the invention, consisting of a unit 11 in two parts 12, 13, is mounted at the top of the drain arrangement, in this case namely the extension ring 3, for adaptation of the extension ring 3 to the gradient of the upper surface of the underlayer.

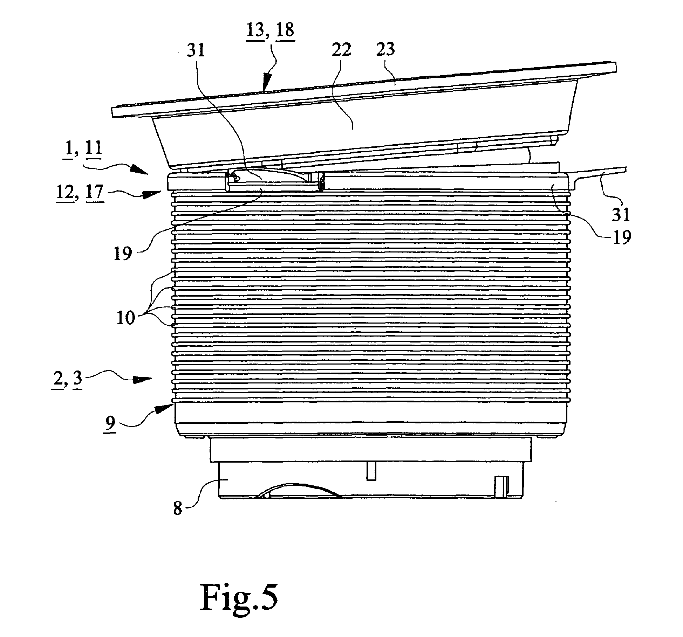

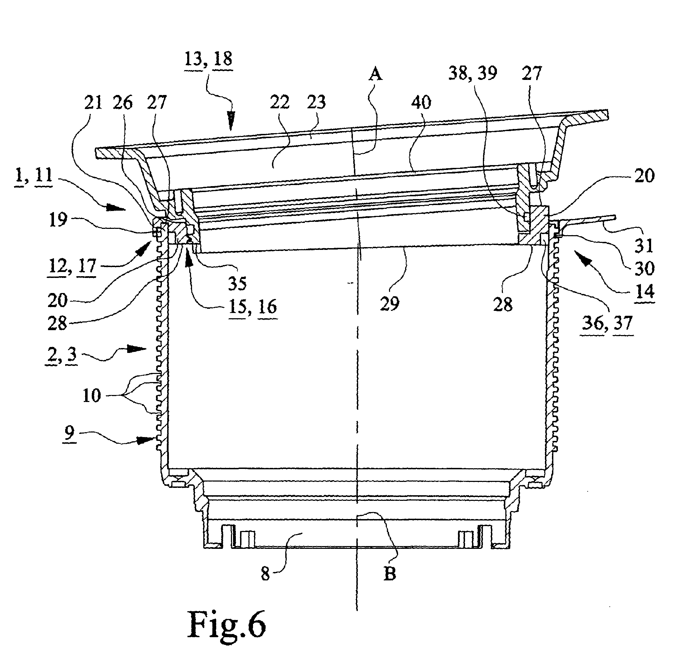

The unit 11 thus comprises a first part 12 with means 14 for mounting the unit onto the extension ring 3. The first part 12 furthermore demonstrates a first adjustment means 15 that interacts with a second adjustment means 16 on the second part 13 of the unit 11. It is in this way possible to place the second part 13 obliquely or at an angle relative to the first part 12 essentially to the same extent as the upper surface of the underlayer in which the drainage gully 4 with the extension ring 3 are installed (see, preferably, Figures 5 and 6). The said mounting means 14 on the first part 12 is furthermore designed such that it is possible to place as required the second part 13 obliquely or at an angle in essentially the same direction as the said underlay.

Such a design allows, as has been previously stated, in this case adaptation of the extension ring 3 to the upper surface of the underlay such that optimal sealing and drainage are achieved.

The first part 12 of the unit 11 is constituted in the design shown by a mounting ring 17 that is mounted on the extension ring 3 such that it can be adjusted, and the second part is constituted by an adapter ring 18 installed internally to the mounting ring in a manner that allows adjustment. The mounting ring 17 is designed in its cross-section principally as an angle-piece with at least two legs 19, 20. One leg 19 demonstrates the said mounting means 14 and the second leg 20 demonstrates the said first adjustment means 15. In the design shown, in which the extension ring 3 demonstrates at the top an edge section 21 of the tube-formed part 9 that extends essentially vertically, the mounting ring 17 is principally U-formed in cross-section, and, when the unit 11 is mounted onto the extension ring, it is arranged with the U open at the bottom over the said edge section of the extension ring, such that the leg 19 with the mounting means 14 extends externally of the edge section, and the leg 20 with the said first adjustment means 15 extends internally of it. Thus the legs 19, 20 extend as is shown preferably essentially vertically externally and internally of the said edge section 21. The adapter ring 18 demonstrates in turn a principally tube-shaped passage section 22 that extends internally to the leg 20 when the unit 11 is in its mounted position on the extension ring 3, and on which the said second adjustment means 16 is arranged, and a section 23 that lies upstream of the said passage section and that is radially outwardly directed, for mounting at the level of the upper surface of the extension ring on the underlayer. Also the passage section 22 extends preferably essentially vertically within the leg 20.

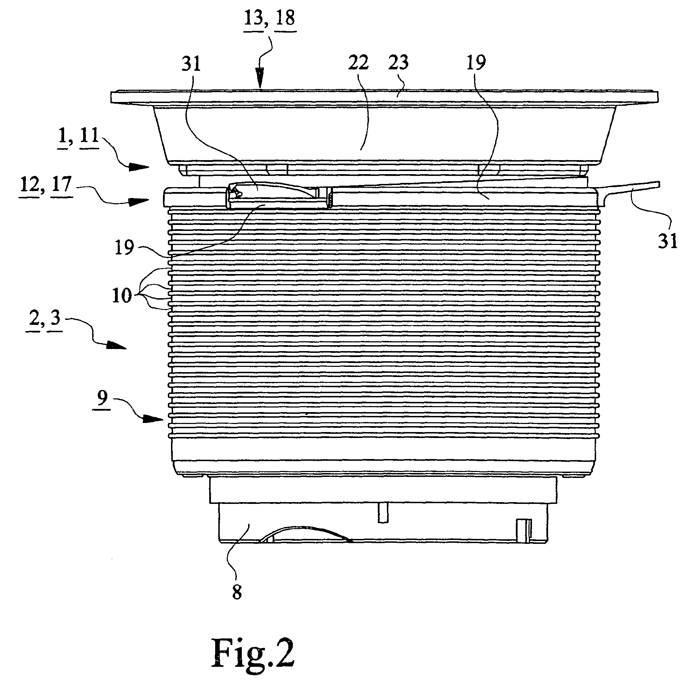

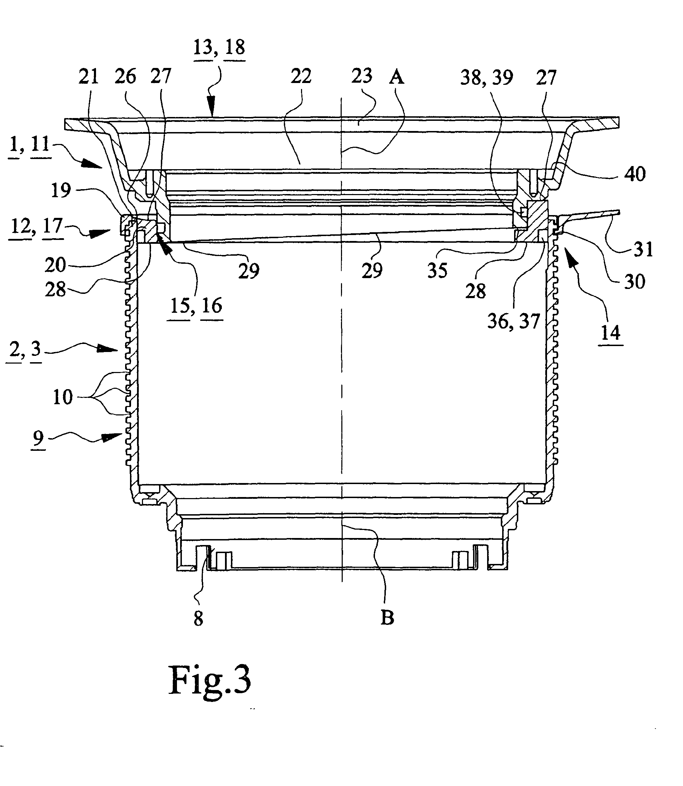

The first and second adjustment means 15, 16 are preferably designed such that they allow as required continuous displacement through turning the second part 13 of the unit 11 relative to the first part 12 of the unit. The second part 13 is in this way in a simple manner placed obliquely relative to the first part 12 essentially corresponding to the gradient of the upper surface of the underlayer in which the drainage gully 4 and the extension ring 3 are installed. The said first and second adjustment means 15, 16 allow displacement through turning of the second part 13 of the unit 11, between a first end position in which the first and second parts 12, 13 of the unit extend essentially parallel to each other (see, preferably, Figures 2 and 3) and a second end position where the second part 13 is placed maximally obliquely relative to the first part 12 (see preferably Figures 5 and 6). In the preferred embodiment shown the distance between these end positions corresponds to a rotation of approximately 180° of the second part 13 relative to the first part 12. The second part 13 is placed obliquely in the said second end position by approximately 5° relative to the first part 12. The arrangement 1 according to the invention can in this manner be used for by far the majority of gradients of the upper surface of the underlay that are found for drain arrangements 2 of the type in question.

In the preferred embodiment shown, the said first and second adjustment means 15, 16 are formed by a flange 24 that is principally directed radially outwards on the first part 12 of the unit 11 and by a groove 25 that is principally directed radially outwards, with which the flange interacts, on the second part 13 of the unit 11. Inversely, the flange may be located on the second part of the unit and the groove on the first part of the unit. Furthermore, the adjustment means 15, 16 may be designed by other suitable methods, not described in more detail here. The flange 24 in the design shown is located on the leg 20 that extends internally of the extension ring 3 in its mounted position, on the first part 12 that is essentially designed as a U-formed mounting ring 17, and the groove 25 on the outer surface of the passage section 22 of the second part 13 of the unit 11 designed as an adapter ring 18.

A simple manner of achieving the desired oblique position of the second part 13 relative to the first part 12 is to arrange the flange 24 and the groove 25, as shown, such that the flange in the first part and the groove in the second part are positioned obliquely in the mounted position on the extension ring 3, essentially in the vertical direction, relative to an upper edge of the essentially vertical edge section 21 of the extension ring, and thus obliquely, essentially in the vertical direction, also relative to the general disposition of the extension ring. To be precise, the first part 12 of the unit 11 is thus so designed in the embodiment of the arrangement according to the invention shown, that the upper surface 27 of the leg 20 that extends internally of the extension ring 3 extends obliquely, essentially in the vertical direction, relative to a lower edge 28 of the said leg and correspondingly obliquely relative to the leg 19 that extends externally of the extension ring. The flange 24 extends parallel to the said upper side 27 and thus also obliquely relative to the said lower edge 28 and relative to the external leg 19. The internal leg 20 thus demonstrates in this way variable length. The second part 13 of the unit 11 is designed in an equivalent manner such that the mounting section 23 that is directed radially outwards extends for this reason obliquely, similarly essentially in the vertical direction, relative to the lower surface of the said part, i.e. obliquely relative to a lower edge 29 of the passage section 22 of the second part. The groove 25 extends obliquely, essentially in the vertical direction, relative to the said mounting section 23 and parallel to the said lower edge 29 of the passage section 22. The passage section 22 thus in this manner demonstrates also a total length that can be varied.

The flange 24 consequently runs obliquely, after mounting onto the extension ring 3, essentially in the vertical direction, also relative to the upper surface 26 of the edge section 21 of the extension ring. The groove 25, which interacts with the flange 24, also extends obliquely relative to the said upper surface 26. However, since the mounting section 23 of the second part 13 also extends obliquely relative to the groove 25, and this to an extent that equals that of the flange 24 relative to the upper surface 26 of the edge section 21 of the extension ring 3, the gradient of the mounting section 23 will vary when the second part 13 is rotated relative to the first part 12. The gradient will vary between the said first end position, where the obliquity of the flange 24 relative to the upper surface 26 of the extension ring 3 and the obliquity of the mounting section 23 relative to the groove 25, and thus relative also to the flange 24, cancel each other and where the said mounting section extends essentially parallel with the upper surface of the extension ring, i.e. the second part 13 extends essentially parallel with the first part 12 and thus, as is also the case for the unit 11 in its entirety, parallel also with the extension ring, provided that, for example, the central longitudinal axes A and B of these parts lie, as is shown, parallel to, preferably co-axial with, each other (see preferably Figure 3), and the said second end position in which the gradient of the mounting section 23 relative to the upper surface 26 of the extension ring has been essentially doubled, i.e. the second part 13 is located maximally obliquely relative to the first part 12 and thus relative also to the extension ring (see preferably Figure 6).

The said mounting means 14 on the first part 12 of the unit 11 is designed such that it allows, as required, when the unit is in its mounted position on the extension ring 3, displacement by rotation of the first part 12, and thus of also the second part 13, relative to the extension ring. It is thus possible, if the second part 13 is located obliquely relative to the first part 12 as described above, to orient the second part such that it has a gradient in the same direction as that of the upper surface of the underlayer in which the drainage gully 4 with the extension ring 3 has been installed. The said mounting means 14 is, furthermore, designed to allow displacement through rotation of the said first part 12 and second part 13 between 0° and 360° relative to the extension ring 3.

In the preferred embodiment shown, the said mounting means 14 is constituted by at least one hook section 30 directed radially inwards and that can be inserted into one of the encircling grooves 10 on the outer surface of the extension ring 3. The hook section 30 can be displaced along a groove 10 after it has been inserted into the groove for rotation of the said first and second parts 12, 13 of the unit 11 relative to the extension ring 3. In the preferred embodiment shown, three hook sections 30 are arranged evenly distributed peripherally around the first part 12, such that a firm grip is obtained around the complete extension ring 3. The number of hook sections, however, may vary. Thus a single hook section may be arranged, and in this case it is an advantage if it is fully encircling. The hook sections 30 are located on the inner surface of the leg 19 that is external to the extension ring 3 when this is in its mounted position on the first part 12 that is designed principally as a U-shaped mounting ring 17.

In order to facilitate the mounting and dismounting of the unit 11 on the extension ring 3, grip sections 31 are located or arranged, in the design displayed, opposite the hook sections 30 on the outer surface on the leg 19, of the first part 12, that extends externally of the extension ring 3. Also the grip sections may vary in quantity, for example, one single encircling grip section may be arranged on the first part 12, and they do not necessarily need to be located opposite to the hook sections.

The first part 12 of the unit 11 shows furthermore, in the preferred embodiment shown, stops 32 for limiting the obliquity of gradient of the second part 13 relative to the first part. The first part 12 of the unit 11 is thus designed or provided with at least one stop 32 that interacts with stop surfaces 33 and 34 on the second part 13 of the unit in order to limit the rotation of the second part relative to the first part. The stop 32 is arranged on the inner surface of the leg 20 that lies internally of the extension ring 3 when this is in its mounted position, on the first part 12 that is designed principally as a U-shaped mounting ring 17. It is appropriate that the stop 32 grips into a groove or a recess that has an extent that is limited by the said stop surfaces 33, 34 in the longitudinal direction in the second part 13 of the unit 11. Since, as has been described above, a rotation of approximately 180° is sufficient to reach the end position with maximal gradient of the second part 13 relative to the first part 12 from the end position in which the parts 12, 13 are located essentially parallel with each other, the said groove or recess preferably has an extent between the stop surfaces 33, 34 in the longitudinal direction that corresponds to approximately half of the circumference of the second part. In the preferred embodiment shown, the stop 32 grips into a recess 35 that is located in the lower edge 29 of the passage section 22 of the second part 13 that is designed as an adapter ring 18. Alternatively, a groove for the stop 32 can be located on the outer surface of the passage section 22 of the second part 13. It is also possible within the scope of the invention to provide two stops on the first part 12 of the unit and an interacting part on the second part 13 (a peg, for example, that protrudes or that forms a recess from the lower edge of the passage section 22 of the second part 13), and it is also possible to design the adjustment means 15, 16 suitably in such a manner that no stop is required.

The first part 12 of the unit 11 is furthermore designed with or provided with at least one sealing means 36 such that in the mounted position on the drain arrangement 2, in the design shown on the extension ring 3, it makes sealing contact with the inner surface of the drain arrangement, i.e. the extension ring. It is appropriate that the said sealing means 36 is constituted by a sealing ring integrated with the first part 12 of the unit 11 or arranged on this part. The first part 12 of the unit 11 thus preferably demonstrates a groove or a recess 37 for the sealing means 36 on the outer surface of the leg 20 that extends internally to the extension ring 3 on the first part designed as a U-formed mounting ring 17.

Also the second part 13 of the unit 11 is designed with or provided with a sealing means 38 to make sealing contact with the first part 12 of the unit. The contact pressure of the sealing means 38, however, must not be so forceful that the rotation of the second part 13 relative to the first part 12 is made significantly more difficult. Also in this case the sealing means 38 is constituted by a sealing ring integrated with the said second part 13 or arranged on this part. The said second part demonstrates in a similar manner a groove or a recess 39 for the sealing means 38 on the outer surface of the passage section 22 of the second part designed as an adapter ring 18. The groove or recess 39 is arranged over the groove 25 in the second part 13 of the unit for the flange 24 on the first part 12 of the unit. The groove or the recess 39 in this way extends essentially parallel to the groove 25 in the second part 13 for the flange 24 on the first part 12.

It should be noted also that the second part 13 of the unit 11 demonstrates a seating 40 for a clamping ring for fixing a floor covering at the drain arrangement 2 in question, independently of whether this is a drainage gully or an extension ring for a drainage gully. A strainer is installed above the clamping ring in known manner.

It will be obvious for one skilled in the arts that the invention can be changed and modified within the scope of the attached patent claims, without departing from the idea and purpose of the invention. In addition to that which is described above, thus, can the arrangement according to the invention be used for other types of drain arrangement where an adaptation to a gradient of the upper surface of a underlayer for the drain arrangement is required or is desired. The arrangement may have another form than a ring or tube form, although these are, naturally, most common, and are necessary for achieving the required function for the embodiment described above and illustrated in the drawings. The arrangement may be manufactured from metal or plastic. The quantity, the forms and the locations of parts that are components of the arrangement can differ from that which has been specified above.

## Claims

1. An arrangement (1) for a drain arrangement (2) for the adaptation of the drain arrangement to the gradient of the upper surface of an underlayer in which the drain arrangement is installed,
**characterised in**
**that** the arrangement (1) consists of a unit (11) that can be mounted at the top of the drain arrangement (2),
**that** the said unit (11) comprises a first part (12) with means (14) for the mounting of the unit onto the drain arrangement (2) and with a first adjustment means (15) that interacts with a second adjustment means (16) on a second part (13) of the unit in order to place as required the second part obliquely or to cause it to lie at an angle relative to the first part essentially to the same degree as the upper surface of the underlayer in which the drain arrangement is installed, and
**that** the said mounting means (14) on the first part (12) is designed such that it is possible to place as required the second part (13) obliquely or to cause it to lie at an angle in essentially the same direction as the upper side of the said underlayer.

2. The arrangement (1) according to claim 1, **characterised in that** the first part (12) of the said unit (11) is constituted by a mounting ring (17) that can be mounted onto the drain arrangement (2) in a manner that allows it to be regulated, and **in that** the second part (13) of the unit is constituted by an adapter ring (18) that has been installed internal to the mounting ring in a manner that can be regulated.

3. The arrangement (1) according to claim 2, **characterised in that** the mounting ring (17) is designed in cross-section principally as an angle piece with at least two legs (19, 20), where one leg (19) demonstrates mounting means (14) and the second leg (20) demonstrates the said first adjustment means (15).

4. The arrangement (1) according to claim 3, whereby the arrangement (2) demonstrates at its top an essentially vertical extending edge section (21), **characterised in that** the mounting ring (17) is principally U-shaped in cross-section, and that it is arranged with the U open downwards over the said edge section (21) of the drain arrangement when the unit (11) is in its mounted state on the drain arrangement (2), such that the leg (19) with the mounting means (14) extends externally of the edge section of the drain arrangement and the leg (20) with the said first adjustment means (15) internally to it.

5. The arrangement (1) according to any one of claims 2 to 4, **characterised in that** the adapter ring (18) demonstrates an essentially tube-formed passage section (22), on which the said second adjustment means (16) is arranged, and a section (23) that is directed radially outwards from the passage section for mounting at the level of the upper surface of the underlayer in which the drain arrangement (2) is installed.

6. The arrangement (1) according to any one of the preceding claims, **characterised in that** the said first and second adjustment means (15, 16) are designed such that they allow, as required, continuous displacement through rotation of the second part (13) of the unit (11) relative to the first part (12) of the unit in order in this way to place the second part obliquely relative to the first part essentially corresponding to the gradient of the upper surface of the underlay in which the drain arrangement is installed.

7. The arrangement (1) according to claims 6, **characterised in that** the said first and second adjustment means (15, 16) are designed to allow displacement through rotation of the second part (13) of the unit (11) between a first end position in which the first and second parts (12, 13) of the unit extend essentially parallel with each other, and a second end position where the second part is placed maximally obliquely relative to the first part (12).

8. The arrangement (1) according to claims 7, **characterised in that** the distance between the first and second end position corresponds to rotation of the second part by approximately 180°.

9. The arrangement (1) according to claim 7 or 8, **characterised in that** the said second part (13) is placed obliquely by approximately 5° relative to the first part (12) when at the said second end position.

10. The arrangement (1) according to any one of claims 6 to 9, **characterised in that** the said first and second adjustment means (15, 16) are formed by a flange (24), directed essentially radially inwards, on the first part (12) of the unit (11) and by a groove (25) directed essentially radially outwards in which the flange interacts, on the second part (13) of the unit.

11. The arrangement (1) according to claim 10, **characterised in that** the flange (24) is located on the inner surface of the leg (20) that extends internal to the drain arrangement when in its mounted position, on the first part (12) that is designed as an essentially U-formed mounting ring (17), and that the groove (25) on the outer surface of the passage section (22) of the second part (13) is designed as an adapter ring (18).

12. The arrangement (1) according to either claim 10 or 11, **characterised in that** the flange (24) extends obliquely relative to an upper surface (26) of the drain arrangement (2) and relative to the mounting section (23) of the second part (13) designed as an adapter ring (18).

13. The arrangement (1) according to any one of claims 10 to 12, **characterised in that** the groove (25) extends obliquely relative to an upper surface (26) of the drain arrangement (2) and relative to the mounting section (23) of the second part (13) designed as an adapter ring (18).

14. The arrangement (1) according to any one of the preceding claims, **characterised in that** the said mounting means (14) on the first part (12) of the unit (11) is designed such that it allows, as necessary, when the unit is located in its mounted position on the drain arrangement (2), displacement through rotation of the said first part, and thus also of the said second part (13), relative to the drain arrangement in order in this way to orient, if the second part is placed obliquely relative to the first part, the second part such that it has a gradient that lies in the same direction as that of the upper surface of the underlayer in which the drain arrangement is installed.

15. The arrangement (1) according to claim 14, **characterised in that** the said mounting means (14) is designed to allow displacement through rotation of the said first and second parts (12, 13) between 0° and 360°.

16. The arrangement (1) according to either claim 14 or 15, **characterised in that** the said mounting means (14) is constituted by at least one hook section (30) that is directed radially inwards and that can be introduced into an encircling groove (10) on the outer surface of the drain arrangement (2), and **in that** the hook section can be displaced after insertion in the said groove for rotation of the said first and second parts (12, 13) of the unit (11) relative to the drain arrangement.

17. The arrangement (1) according to claim 16, **characterised in that** the said mounting means (14) is constituted by three hook sections (30) distributed evenly around the perimeter of the first part (12).

18. The arrangement (1) according to claim 17, **characterised in that** the hook sections (30) are located on the inner surface of the leg (19) that extends externally to the drain arrangement when in its mounted position on the drain arrangement (2), on the first part (12) essentially having the form of a U-formed mounting ring (17).

19. The arrangement (1) according to claim 18, **characterised in that** grip sections (31) are designed or arranged opposite to the hook sections (30) on the outer surface of the leg (19) of the first part (12) that extends externally of the drain arrangement to facilitate mounting and dismounting of the unit (11) on the drain arrangement (2).

20. The arrangement (1) according to any one of the preceding claims, **characterised in that** the first part (12) of the said unit (11) demonstrates stops (32) in order to limit the oblique placement or gradient of the second part (13) relative to the first part.

21. The arrangement (1) according to claim 20, **characterised in that** the first part (12) of the unit (11) is designed or provided with at least one stop (32) that interacts with stop surfaces (33, 34) on the second part (13) of the unit in order to limit the rotation of the second part relative to the first part.

22. The arrangement (1) according to claim 21, **characterised in that** the said stop (32) is arranged on the inner surface of the leg (20) that extends internally of the drain arrangement when in its mounting location on the first part (12) essentially designed as a U-formed mounting ring (17).

23. The arrangement (1) according to claim 21 or 22, **characterised in that** the said stop (32) grips into a groove or recess with a longitudinal extent along the second part (13) of the unit (11) that is limited by the said stop surfaces (33, 34).

24. The arrangement (1) according to claim 23, **characterised in that** the said groove or recess has an extent in the longitudinal direction between the stop surfaces (33, 34) that corresponds to approximately half of the circumference of the second part (13).

25. The arrangement (1) according to claim 23 or 24, **characterised in that** the said stop (32) grips a recess (35) that is located on the lower edge (29) of the passage section (22) of the second part (13) that is designed as an adapter ring (18).

26. The arrangement (1) according to any one of the preceding claims, **characterised in that** the first part (12) of the said unit (11) is designed or provided with at least one sealing means (36) to make sealing contact when in the mounted position on the drain arrangement (2) against the inner surface of the drain arrangement.

27. The arrangement (1) according to claim 26, **characterised in that** the said sealing means (36) is constituted by a sealing ring integrated with the said first part (12) or arranged on it.

28. The arrangement (1) according to claim 26 or 27, **characterised in that** the said first part (12) of the unit (11) demonstrates a groove or recess (37) for the said sealing means (36) on the outer surface of the leg (20) that extends internally of the drain arrangement when in its mounted position on the drain arrangement (2) on the first part essentially designed as a U-formed mounting ring (17).

29. The arrangement (1) according to any one of the preceding claims, **characterised in that** the second part (13) of the said unit (11) is designed or provided with at least one sealing means (38) for sealing contact with the first part (12) of the unit.

30. The arrangement (1) according to claim 29, **characterised in that** the said sealing means (38) is constituted by a sealing ring integrated with the second part or arranged on it.

31. The arrangement (1) according to claim 29 or 30, **characterised in that** the said second part (13) of the unit (11) demonstrates a groove or a recess (39) for the said sealing means (38) on the outer surface of the passage section (22) of the second part designed as an adapter ring.
